# EUROPEAN PATENT SPECIFICATION

(11) **EP 2 601 012 B1**
(45) Date of publication and mention of the grant of the patent: **14.05.2014**
(21) Application number: 11739050.0
(22) Date of filing: 29.07.2011
(51) Int. Cl.: B23Q 17/09, B23C 3/35

(54) **METHOD FOR VERIFYING TOOL INTEGRITY IN AUTOMATIC MULTI-TOOL KEY DUPLICATING MACHINES, AND MACHINE FOR IMPLEMENTING THE METHOD**
VERFAHREN ZUR ÜBERPRÜFUNG DER UNVERSEHRTHEIT EINES WERKEUGS BEI AUTOMATISCHEN MULTITOOL-SCHLÜSSELKOPIERMASCHINEN UND MASCHINE ZUR UMSETZUNG DES VERFAHRENS
PROCÉDÉ POUR VÉRIFIER L'INTÉGRITÉ D'UN OUTIL DANS DES MACHINES MULTI-OUTIL AUTOMATIQUES À DUPLIQUER LES CLÉS, ET MACHINE PERMETTANT DE METTRE EN OEUVRE CE PROCÉDÉ

(30) Priority: 06.08.2010 IT VE20100048
(43) Date of publication of application: 12.06.2013
(73) Proprietor: SILCA S.p.A., 31029 Vittorio Veneto (IT)
(72) Inventor: GUSMEROLI, Roberto, I-31014 Colle Umberto (IT)
(74) Representative: Piovesana, Paolo
(86) International application number: PCT/EP2011/063162
(87) International publication number: WO 2012/016934

(56) References cited:
- US-A1- 2001 033 781
- US-A1- 2007 022 619

## Description

The present invention relates to a method for verifying tool integrity in automatic multi-tool key duplicating machines, and a machine for implementing the method.

Three-axis electronic machines are known for duplicating dimple keys and laser keys. As these require considerable operational accuracy, it is necessary to be able to precisely determine the distance between the surface on which the key blank to be bitted rests and the tip of the particular tool mounted on the spindle, as this distance is critical in calculating the depth of the individual dimpling indentations by the machine software

In these known duplicating machines, the different operations on the keys to be bitted require frequent tool substitution, which is done manually. This involves inevitable problems related both to the different length of the individual tools and to their greater or lesser extent of insertion into the machine spindle, with consequent possible uncertainties in the level of the tip of the tool mounted in the machine spindle and possible inaccuracies in determining the depth of the dimples.

To overcome this drawback, which would compromise the operational accuracy of the machine, particular clamps have been long proposed provided with reference plugs for determining the zero level of the tool tip, independently of the tool length and of the extent of its insertion into the machine spindle. With these tool clamps, after each tool substitution, the tool is rested with its tip on the reference peg provided in them, such as to establish an electrical contact between the two, and enable the machine software to calculate from the corresponding signal the level difference between the tool tip and the clamp surface on which the key blank to be duplicated rests.

The level of the tool tip constitutes zero level, relative to which the machine software relates the commands for moving the tool holder spindle along the Z axis.

The clamp calibration, i.e. the determination of the level difference between the plug and the clamp surface, on which the key blank rests, is effected once and for all, using a particular sized tool (feeler).

For duplicating dimple keys and laser keys, industrial electronic machines have been recently used provided with several tools which can be substituted automatically. These machines are loaded with large quantities of key blanks to undergo different operations with different tools, and carry out all the operations required for their bitting by means of automatic cycles.

In these automatic multi-tool machines, the zero level for each tool is determined differently once and for all, by milling a key blank placed on the machine clamp and then measuring the depth of the cut obtained. Consequently in these known automatic multi-tool machines no reference plug is provided in the clamp, as it would be superfluous given the different manner of determining the zero level of the tool tip, and there is also no facility for using this plug, as manual substitution of the tool does not take place at each operation but only if it undergoes breakage, or is programmed for manual substitution after a predetermined very large number of operations.

Hence as manual tool substitution is infrequent, it is not possible to visually check its integrity, and it can happen that a possible breakage is identified only after a large number of keys have been cut, they then having to be discarded.

US 2001/0033781 discloses an apparatus and method for determining a bitting pattern of a key comprising a housing used for optically outlining at least the profile of the blade of the key so as to form an image. The image is digitized and information created therefrom, including information about the width of the blade of the key and a plurality of selected longitudinal position along the length to include the width of the blade at the location of at least one cut of the bitting pattern. The information about the bitting pattern of the key digitzed can then be used to cut the bitting patten into a key blank.

The object of the present invention is to eliminate this drawback by solving the problem of verifying tool integrity in automatic multi-tool key duplicating machines.

This and other objects which will be apparent from the ensuing description are attained, according to the invention, by a method for verifying tool integrity in automatic multi-tool key duplicating machines as described in claim 1.

The automatic multi-tool machine presents the characteristics indicated in claim 4.

The present invention is further clarified hereinafter with reference to the accompanying drawings, in which:
Figure 1 is an exploded perspective schematic view of a clamp of the automatic multi-tool key duplicating machine of the invention and the relative tool holder unit,

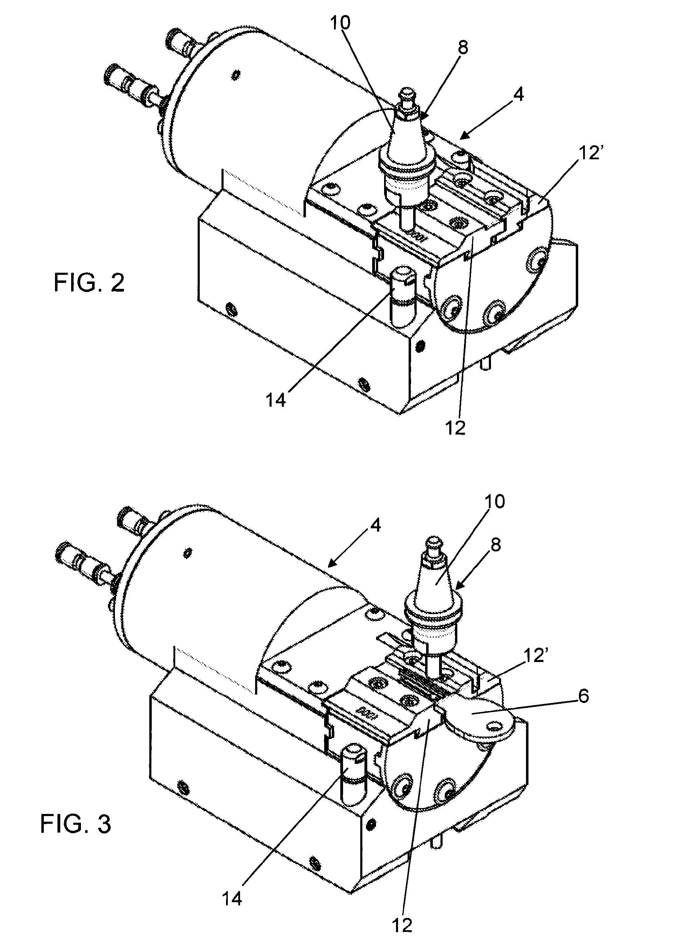

Figure 2 is a perspective view of just the clamp of said machine showing a tool undergoing integrity verification, and
Figure 3 shows it in the same view, with a key blank undergoing bitting.

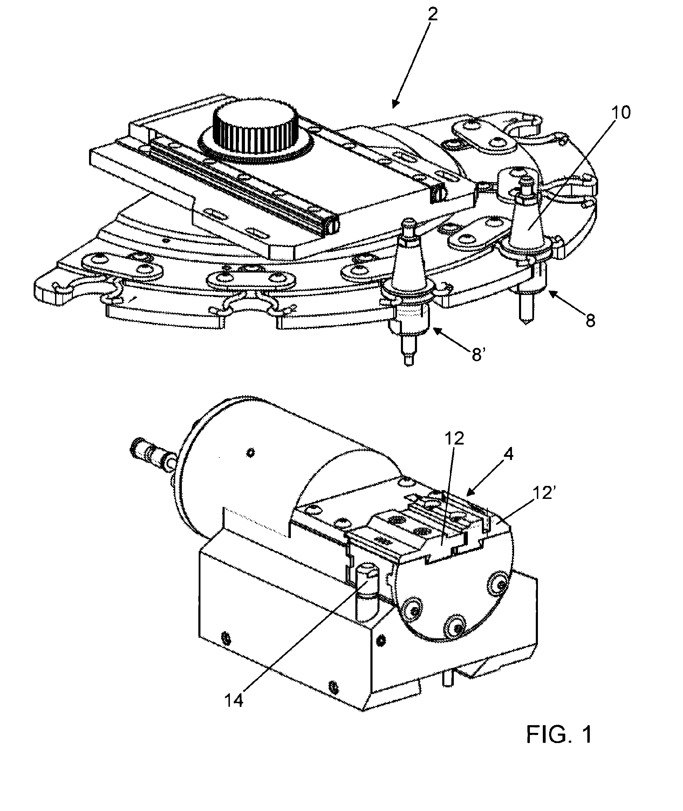

As can be seen from the figures, the method of the invention is used in automatic multi-tool key duplicating machines. One of these machines, or rather its tool holder unit 2 and the support clamp 4 for a key blank to be bitted, are shown in Figure 1. This figure shows two different millers 8, 8' mounted on the tool holder unit 2 and each provided with an upper cone 10 for fixing to a tool holder spindle (not shown), with which the machine is provided.

In the illustrated example the clamp 4 is of pneumatic type with two jaws 12, 12', between which the key blank 6 can be clamped while milling its shank.

A plug 14 is applied to the clamp 4, in an manner similar to that which occurs in most of the clamps of electronic machines for duplicating dimple keys and laser keys with manual tool substitution, even though said plug is used for a totally different purpose, as will be apparent hereinafter.

Under normal operating conditions, an automatic mechanism withdraws a key 6 to be bitted from a key blank store (not shown) and positions it within the clamp 4, between the jaws 12, 12', which lock it in the working position. A command is then given to the tool holder spindle (not shown), which withdraws from the tool holder unit 2 a tool 8, 8' suitable for the particular operation to be carried out on the key blank 6, and performs that operation therewith.

It then returns the tool into the tool holder unit 2, from which it withdraws a different tool to carry out a new operation on the key 6, and so on until the key bitting has been completed.

Within the scope of this traditional operation of an automatic multi-tool key duplicating machine, according to the invention the machine provides for positioning the tool holder spindle at a certain periodicity rate such that the tip of the tool 8, 8' rests on a fixed point of the machine structure. As the clamp 4 is generally of the type used in electronic duplicating machines with manual substitution of the different tools, it is already provided with a reference plug 14 used in the traditional machine for determining the tool zero level along the Z axis.

This enables that reference plug 14 to be used as the fixed point of the machine structure, although for the purposes of the present invention any other fixed point on the machine structure would be usable.

Independently of the chosen fixed point, the electrical contact is generated when the tip of the tool 8, 8' touches the reference plug 14, to determine a signal which the machine operative logic associates with the position of the tool holder spindle along the Z axis and memorizes it.

When that tool is again brought into contact with the reference plug 14 at the predetermined periodicity rate, the machine senses the new position of the tool holder spindle along the Z axis, memorizes it and compares it with that previously memorized.

If this comparison shows substantial identity between the two positions, or at most a difference less than a predetermined value, this signifies substantial tool integrity; in contrast, the existence of a difference exceeding that predetermined value signifies loss of tool integrity, either because of abnormal wear or because of breakage, causing a tool substitution signal to be emitted.

As stated, the method of the invention requires the use of a reference point which is fixed relative to the machine structure, the purpose of this fixed point being to sense any differences in the position of the tool holder spindle along the Z axis due to the loss of tool integrity. This fixed point can consist of any point on the machine structure, even if in the described example it consists of the reference plug usually provided in the tool holder clamp of traditional electronic machines with manual tool substitution, given the frequent substitution of these latter and the facility for visually verifying their state by the operator.

In contrast, in the case of automatic multi-tool machines, as it is not possible to visually verify the tool state at each manual tool substitution, periodic automatic operations must necessarily be carried out, for which the reference plug mounted on the clamp or on any other fixed machine part enables a new function to be performed, which is not provided in, and in any event superfluous in, traditional machines with manual tool substitution.

## Claims

1. A method for verifying the integrity of a tool in automatic multi-tool key duplicating machines, **characterised by** bringing each tool (8, 8'), mounted on the relative tool holder, into contact at predetermined frequency with a reference plug (14) applied to a fixed point of said machine, then determining, by means of an electrical signal generated by the contact of the tip of said tool with said reference plug, the position of the tip of said tool (8, 8') relative to said reference plug (14), monitoring the variation of this position with time, and considering the tool no longer integral if a predetermined value of said position variation is exceeded.

2. A method as claimed in claim 1, **characterised by** bringing each tool (8, 8') into contact with a reference plug (14) with which the machine clamp (4) is provided.

3. A method as claimed in one of the preceding claims, **characterised by** generating a corresponding indication when the predetermined value of said tool holder position variation is exceeded.

4. An automatic multi-tool key duplicating machine for implementing the method in accordance with one of the claims 1 to 3, of the type comprising a store for a plurality of key blanks (6) to be bitted, at least one clamp (4) in which each key is individually locked, a tool holder unit (2) for supporting a plurality of different tools (8, 8') corresponding to the different operations to be performed on the key locked in said clamp, a tool holder arranged to withdraw from said tool holder unit (2) the tool required for performing the specific operation, and a control unit which controls the correct execution of the different operative steps, **characterised in** the machine structure is provided with at least one reference plug (14) on which the tip of each tool (8, 8') mounted on the tool holder is rested, the control unit being provided with means for causing the tip of each tool mounted on the tool holder to be periodically positioned on said plug (14), with means for detecting the position of said tool holder relative to said reference plug, with means for utilizing the electrical signal generated by contact between the tool tip and said plug, with means for verifying the variation of said tool holder position with time, and with means for indicating when a predetermined value of said variation is exceeded.

5. A machine as claimed in claim 4, **characterised in that** said reference plug (14) is rigid with the clamp (4) for locking the key blank (6) to be bitted.

## Patentansprüche

1. Verfahren zur Überprüfung der Unversehrtheit eines Werkzeugs bei automatischen Multitool-Schlüsselkopiermaschinen, **gekennzeichnet durch** Inkontaktbringen jedes Werkzeugs (8, 8'), das an dem zugehörigen Werkzeughalter angebracht ist, bei einer vorbestimmten Frequenz mit einem Referenzstecker (14), der an einer festen Stelle der Maschine angewandt wird, danach, mittels eines elektrischen Signals, das **durch** den Kontakt der Spitze des Werkzeugs mit dem Referenzstecker erzeugt wird, Bestimmen der Position der Spitze des Werkzeugs (8, 8') in Bezug auf den Referenzstecker (14), Überwachen der Variation dieser Position über die Zeit und Betrachten des Werkzeugs als nicht ganzheitlich, wenn ein vorbestimmter Wert der Positionsvariation überschritten wird.

2. Verfahren nach Anspruch 1 , **gekennzeichnet durch** das Inkontaktbringen jedes Werkzeugs (8, 8') mit einem Referenzstecker (14), mit dem die Maschinenklemme (4) bereitgestellt ist.

3. Verfahren nach einem der vorherigen Ansprüche, **gekennzeichnet durch** das Erzeugen einer entsprechenden Anzeige, wenn der vorbestimmte Wert der Positionsvariation des Werkzeughalters überschritten wird.

4. Automatische Multitool-Schlüsselkopiermaschine zum Umsetzen des Verfahrens nach einem der Ansprüche 1 bis 3 des Typs, der ein Magazin für mehrere Schlüsselrohlinge (6) zum Fertigen des Barts umfasst, wobei mindestens eine Klemme (4), in der jeder Schlüssel einzeln eingeklemmt ist, eine Werkzeughaltereinheit (2) zum Tragen der mehreren unterschiedlichen Werkzeuge (8, 8'), die den unterschiedlichen durchzuführenden Betriebsabläufen, die an dem Schlüssel, der in der Klemme eingeklemmt ist, durchgeführt werden, einen Werkzeughalter zum Entfernen des Werkzeugs, das zum Durchführen des spezifischen Betriebsablaufs erforderlich ist, von der Werkzeughaltereinheit (2), und eine Steuereinheit, welche die richtige Ausführung der verschiedenen Betriebsablaufschritte steuert, umfasst, **dadurch gekennzeichnet, dass** der Maschinenrahmen mit mindestens einem Referenzstecker (14) bereitgestellt ist, auf dem die Spitze jedes Werkzeugs (8, 8'), das an dem Werkzeughalter befestigt wird, ruht, wobei die Steuereinheit mit Mitteln bereitgestellt wird, die bewirken sollen, dass die Spitze jedes Werkzeugs, das an dem Werkzeughalter befestigt ist, periodisch auf dem Stecker (14) über Mittel zum Erkennen der Position des Werkzeughalters in Bezug auf den Referenzstecker, über Mittel zum Benutzen des elektrischen Signals, das von dem Kontakt zwischen der Spitze und dem Stecker erzeugt wird, über Mittel zur Überprüfung der Variation der Werkzeughalterposition über die Zeit und über Mittel zur Anzeige, wann ein vorbestimmter Wert der Variation überschritten wird, angeordnet wird.

5. Maschine nach Anspruch 4, **dadurch gekennzeichnet, dass** der Referenzstecker (14) steif mit der Klemme (4) zum Einklemmen des mit einem Bart zu fertigenden Schlüsselrohlings (6) ausgebildet ist.

## Revendications

1. Procédé pour vérifier l'intégrité d'un outil dans des machines multi-outil automatiques à dupliquer les clés, **caractérisé en ce que** l'on amène chaque outil (8, 8'), monté sur le porte-outil relatif, en contact à une fréquence prédéterminée avec un plot de référence (14) appliqué à un point fixe de ladite machine, puis **en ce que** l'on détermine, au moyen d'un signal électrique généré par le contact de la pointe dudit outil avec ledit plot de référence, la position de la pointe dudit outil (8, 8') par rapport audit plot de référence (14), on contrôle la variation de cette position en fonction du temps, et l'on considère que l'outil n'est plus intégral si une valeur prédéterminée de ladite variation de position est dépassée.

2. Procédé selon la revendication 1, **caractérisé en ce que** l'on amène chaque outil (8, 8') en contact avec un plot de référence (14) qui est disposé sur l'étau (4) de la machine.

3. Procédé selon l'une quelconque des revendications précédentes, **caractérisé en ce que** l'on génère une indication correspondante lorsque la valeur prédéterminée de la variation de position dudit porte-outil est dépassée.

4. Machine multi-outil automatique à dupliquer les clés destinée à mettre en oeuvre le procédé selon l'une quelconque des revendications 1 à 3, du type comprenant un magasin pour une pluralité de clés vierges (6) destinées à être munies de pannetons, au moins un étau (4) dans lequel chaque clé est verrouillée individuellement, une unité porte-outil (2) pour supporter une pluralité d'outils différents (8, 8') correspondant aux différentes opérations devant être effectuées sur la clé verrouillée dans ledit étau, un porte-outil prévu pour retirer de ladite unité porte-outil (2) l'outil requis pour effectuer l'opération spécifique, et une unité de commande qui commande l'exécution correcte des différentes étapes fonctionnelles, **caractérisée en ce que** la structure de la machine est pourvue d'au moins un plot de référence (14) sur lequel repose la pointe de chaque outil (8, 8') monté sur le porte-outil, l'unité de commande étant pourvue de moyens pour amener la pointe de chaque outil monté sur le porte-outil à être positionnée périodiquement sur ledit plot (14), de moyens pour détecter la position dudit porte-outil par rapport audit plot de référence, de moyens pour utiliser le signal électrique généré par contact entre la pointe de l'outil et ledit plot, de moyens pour vérifier la variation de la position dudit porte-outil en fonction du temps, et de moyens pour indiquer lorsqu'une valeur prédéterminée de ladite variation est dépassée.

5. Machine selon la revendication 4, **caractérisée en ce que** ledit plot de référence (14) est connecté rigidement à l'étau (4) pour verrouiller la clé vierge (6) destinée à être munie de pannetons.
